# EUROPEAN PATENT APPLICATION

(11) **EP 4 654 031 A1**
(43) Date of publication of application: **26.11.2025**
(21) Application number: 24177734.1
(22) Date of filing: 23.05.2024
(51) Int. Cl.: G06F 13/16, G06F 13/32, G06F 13/40, G06F 13/42, G06F 13/10

(54) **A SYSTEM FOR APPLYING REMOTE SHARED MEMORY COMMUNICATION OVER PCIE FOR AUTOMOTIVE E/E SYSTEMS**

(71) Applicant: CARIAD SE, 38440 Wolfsburg (DE)
(72) Inventor: Herr, Stefan, 38440 Wolfsburg (DE); Licong, Zhang, 38440 Wolfsburg (DE); Durai, Krishnaswamy, Bengaluru (IN)
(74) Representative: Bals & Vogel Patentanwälte PartGmbB

(57) **Abstract**

The invention is related to a system (S) for a high-bandwidth interconnect (PCIe), especially a Peripheral-Component-Interconnect-Express-Communication, in a vehicle,
the vehicle has an in-vehicle central computing platform (100) as part of a vehicle (101) comprising a plurality of computing platforms (HPC), optionally high performance computing platform and/or integration computing platform, for different functional applications (APP) using a shared memory interface (SHM-API), especially a shared memory application programming interface,
the system (S) comprising:
- a modular software architecture (SA) with different abstraction layers (L1, L2, L3), especially being applicable to heterogeneous vehicle equipment with variable computing platforms (HPC) and/or different functional applications (APP),
- a first abstraction layer (L1) for the high-bandwidth interconnect (PCIe) for an operation system (OS) of microprocessors (uP) of the computing platform (HPC),
- a second abstraction layer (L2) for managing the high-bandwidth interconnection (PCIe),
- a third abstraction layer (L3) for the shared memory interface (SHM-API) for the different functional applications (APP), especially to gain access to the shared memory, preferably provided by the plurality of computing platforms (HPC).

## Description

The invention is related to a system for a high-bandwidth interconnect, especially a Peripheral-Component-Interconnect-Express-Communication, in an in-vehicle central computing platform as part of a vehicle, comprising a plurality of computing platforms for different functional applications using a shared memory interface, e.g. a shared memory application programming interface. Further, the invention is related to a corresponding vehicle comprising a respective system.

Automotive bus systems like CAN/CAN-FD, LIN and FlexRay are typically used in the sensor / actuator layer and not suited for the communication between high performance computing platforms due to their limited bandwidth and static configuration. Ethernet is commonly used for the backbone communication between the high-performance computing platforms. Automotive application of Ethernet uses standard Ethernet protocols including IP, TCP/UDP, but also have automotive specific protocols like SOME/IP. The binding to the application software uses typically the AUTOSAR RTE in Classic AUTOSAR environment, ara::com in the Adaptive AUTOSAR environment or similar implementations. The usage of PCIe ("Peripheral Component Interconnect Express") in other domains are mainly based on the PCIe standard and can have domain specific adaptations or implementation on top of the standard protocol. There have been some initial work in the automotive domain to try to apply PCIe technologies. However, a scalable solution based on PCIe switch for high performance computing platforms with a layered and modular software stack that can be applied to heterogeneous computing platforms has not yet been applied in the automotive domain.

The task of the invention is to overcome at least one of the disadvantages mentioned above. Especially, the aim of the present invention is to provide a system for a high-bandwidth interconnect, especially a Peripheral-Component-Interconnect-Communication, in an in-vehicle central computing platform (as the central computational capacity within a vehicle), comprising a plurality of computing platforms for different functional applications using a shared memory interface, e.g. a shared memory application programming interface, being applicable to heterogeneous vehicle equipment with variable computing platforms and/or different functional applications. Further, the aim of the present invention is to provide a corresponding vehicle comprising a respective system.

According to the first aspect, a system for a high-bandwidth interconnect is provided with the features of the independent system claim. According to the second aspect, a corresponding vehicle comprising a respective system is provided with the features of the independent device claim. Details and features disclosed on individual aspects of the invention also apply to the other aspects of the invention and vice versa.

According to the first aspect, it is provided:
A system for a high-bandwidth interconnect (interconnect may be understand as communication), especially a Peripheral-Component-Interconnect-Express-Communication (can also be called PCIe communication), in an in-vehicle central computing platform as part of a vehicle,
the in-vehicle central computing platform comprising a plurality of computing platforms for different functional applications using a shared memory interface, especially a shared memory application programming interface,
the system comprising:
   - a modular/layered software architecture with different abstraction layers, especially being applicable to heterogeneous vehicle equipment with variable computing platforms and/or different functional applications.

The modular/layered software architecture (which also may be called a software stack) may be divided into the following layers:
The system comprising:
- a first abstraction layer for the high-bandwidth interconnect for an operation system of microprocessors (uP) of the computing platforms (HPC).

OS / Base Layer (L1): The OS ("Operating System") and base layer may contain the PCIe controller drivers in the BSP provided by the SoC ("System On Chip") vendor and the PCIe OS drivers provided by the OS vendor. These drivers provide the basic PCIe functionality according to the PCIe standards and the enumeration of the devices.

The system comprising:
- a second abstraction layer for managing the high-bandwidth interconnect (PCIe).

PCIe Stack Drivers (L2): These drivers may contain the drivers from the PCIe switch vendor for functionalities like DMA and NTB ("Non Transparent Bridge"). The PCIe switch drivers may provide the functionality of interfacing with the PCIe switch incl. e.g., the DMA engine control, the address mapping for the address translation and the status exchange between the node and switch and other nodes. These drivers also may contain the drivers to allocate and configure the physical memories used for communication.

The system comprising:
- a third abstraction layer for the shared memory interface for the different functional applications, especially to gain access to the shared memory, preferably provided by the plurality of computing platforms (HPC).

Abstraction and APIs (L3): This layer may contain runtime daemon for segment and resource management (applications may thus directly write into and read from physical segments and not through the runtime daemon). It may also contain necessary libraries and the APIs towards the applications.

This invention proposes the system and concept to apply PCIe communication as a high-bandwidth interconnect solution based on PCIe switches for data communication between (especially high performance) computing platforms in the automotive domain (e. g. for in-vehicle communication). Proposed modular software solution may be preferably applied to heterogeneous computing platforms using shared memory like API ("Application Programming Interface"), including corresponding mechanisms, software architecture and the interfaces.

The proposed system enables a generic automotive application to use PCIe communication using shared memory like communication paradigm by abstracting the PCIe specific details. This may be achieved by using a software stack with modular/layered software architecture and providing a shared memory like API towards the applications.

The proposed system is not focusing on a particular scenario or function within the vehicle and does not require PCIe specific implementation in the applications. Rather, the proposed system enables the technology to be rolled out on a generic automotive application for different functional domains.

Preferably, the proposed system abstracts the PCIe related details from the applications. Application developers do not need to concern with the PCIe details. The details are addressed by a configurable PCIe software stack (i.e. by the stack functionalities and its configurations).

Advantageously, the proposed system may provide simple and clear shared memory-based communication paradigm based on the DMA ("Direct Memory Access") and/or PIO ("Programmed Input/Output") mechanism.

Advantageously, the proposed system may abstract the details of the HW ("Hardware") / OS ("Operational System") / SW ("Software") framework of the microprocessors of the computing platforms and PCIe switches.

Additionally, utilizing the concept for abstraction, applications may be abstracted from the fact that memory is shared between applications either via local shared memory (i.e. RAM accessible by the CPU of one compute note) or remotely via PCIe. The proposed system may automatically choose (either through static configuration or dynamic decision) according to an addressing scheme (specifying communication relationship and the deployment of the applications) one of the following transfer method:
o Local shared memory segment or equivalent mechanisms (including signaling of data availability for read or write via semaphore as doorbell replacement).
∘ Memory segment on source compute node mirrored to memory segment on target compute node(s) (including doorbell signaling) through DMA via either.
   □ PCIe switch direct DMA for RC-RC connections (incl. scatter/gather DMA when possible).
   □ PCIe switch multicast DMA.
   □ Compute node DMA for RC-EP connections (incl. scatter/gather DMA when possible).
∘ Memory segment read or written through PIO mechanism (including doorbell signaling).
∘ Transfer of data via alternative Ethernet connection, whereby the "shared memory" characteristics is emulated on top of the IP protocol stack, i.e. keeping the "shared memory" abstraction towards the application.

Dividing the software into different layers enables the abstraction of the specifics of the HW ("Hardware"), OS and PCIe switch, so that the stack can be used for an uniform solution for different HW, OS (e.g., Linux or QNX) as well as the PCIe switch. Towards the applications the same API is used. This enables efficient and compatible communication between the high-performance computing platforms (such as computing platforms (HPC)) customized to different automotive functional domains.

With the help of the proposed system a plurality of advantages may be achieved.
(a) The proposed system may use a PCIe switch for the PCIe communication, making the solution scalable to multiple (high performance) computing platforms.
(b) The proposed system provides a modular software architecture for the PCIe stack on the (high performance) computing platforms which applies to heterogeneous (HW and OS) computing platforms.
(c) The proposed system provides higher level protocols and APIs enabling automotive applications to use the remote shared memory communication.

PCIe communication and application in distributed automotive E/E systems may comprise:
A centralized (high performance) platform architecture, which may be implemented as described in the following:
An in-vehicle central computing platform as part of a vehicle, comprising a plurality of computing platforms (HPC), may be integrated in a common casing, especially comprising a power supply and a cooling system. Such an architecture enables the usages of PCIe as communication technology since the (high performance) computing platforms (HPC) may be connected with the PCIe switch, especially without a cable connection.

Furthermore, each of the plurality of computing platforms (HPC) may comprise at least one or more microcontroller and/or microprocessor systems to host one or more functional applications, especially:
- advanced driver assistance systems,
- infotainment functions,
- driving and charging functions,
- connectivity functions, etc.

The whole system comprises multiple (high performance) computing platforms, each of which may comprise multiple microcontroller and microprocessor systems. Each of these (high performance) computing platforms may be used to host software functions of specific domains, like ADAS ("Advanced Driver Assistance Systems"), Infotainment, driving and charging functions, connectivity, etc.

Moreover, each of the plurality of computing platforms may comprise a software stack/layer for the high-bandwidth interconnect, which is deployed on one or more microprocessors (uP) of the computing platform. The PCIe communication may be primarily targeted at the communication between the computing platforms.

Further, a Peripheral-Component-Interconnect-Express-switch may be provided for the high-bandwidth interconnect, especially comprising a firmware with a switch configuration.

Furthermore, a remote management host, preferably in the form of a microcontroller, may be provided, especially comprising a software to run management tasks for a Peripheral-Component-lnterconnect-Express-switch.

Each of the plurality of computing platforms may be connected to a Peripheral-Component-Interconnect-Express-switch using a Peripheral-Component-Interconnect-Express-link, especially comprising one or more Peripheral-Component-Interconnect-Express-lanes, preferably 1, 2, 4 etc. A number couple of PCIe lanes (e.g., by 1, 2, 4), which may be chosen depending on the bandwidth need.

Preferably, the high-speed interconnect may be configured to be used parallel to an Ethernet based communication in the vehicle, especially to serve for such functional applications which require increased bandwidth, reduced latency and/or hardware-based data transfer with reduced interrupt and processing load. The PCIe communication does not need to replace the Ethernet-based backbone communication. It may be parallel to the Ethernet communication to serve for specific use cases requiring large bandwidth, low latency and/or hardware based data transfer with reduced interrupt and processing load.

Potential target use cases may be provided as described in the following:
Potential use cases for the PCIe communication may be divided into the following categories:
- Data transfer with increased/large bandwidth:
   Typical examples of this use case may be transfer of raw sensor data, e.g. camera images, from one (high performance) computing platform to another, optionally also in a multicast fashion. The bandwidth requirement for each individual use case may easily go up to two-digit Gbit/s range and would be too much for Ethernet connection both from the communication bandwidth and processing load point of view. The DMA based transfer using PCIe may solve this problem both from the bandwidth (due to much larger bandwidth) and the processing load (due to HW based data transfer) point of view.
- Data transfer with reduced/low latency:
   PCIe based communication may also enable data transfer that requires low latencies. Due to a large bandwidth and a mature and efficient implementation of the PCIe technology in the lower layer (TLP), the data transfer with PCIe offers also very low latency.
- Data transfer with reduction of interrupt loads:
   PCIe may also provide data transfer with reduced interrupt loads. The DMA transfer using hardware can reduce the number of interrupts generated in the software for the processing of data packets to only those necessary. Therefore, it may also be suited for providing the general availability of data to (high performance) computing platforms (e.g., signals from sensor/actuator layers).

PCIe communication and application in distributed automotive E/E systems may comprise:
A RC-to-RC communication architecture through a PCIe switch, which may be implemented as described in the following:
Preferably, the plurality of computing platforms may be configured to build an RC-to-RC-Architecture for the high-bandwidth interconnect. Advantageously, each of the plurality of computing platforms may have microprocessors (uP) configured as a root complex node within a RC-to-RC-Architecture of the high-bandwidth interconnect. Further, each of the plurality of computing platforms may comprise a corresponding address domain within a RC-to-RC-Architecture of the high-bandwidth interconnect.

Generally, a PCIe node may be configured as a Root Complex node or an End Point node. In the proposed system, each of the (high performance) computing platform may be preferably configured as RC ("Root Complex") node, e. g. having its own memory address domain, which may be partitioned and isolated. The PCIe switch maps and translates between the different memory address domains thus enabling the communication between different root complexes. The RC-to-RC-Architecture may be advantageously since in this case each (high performance) computing platform may have its own memory address domain. Therefore, a system fault on one node might not lead to the unavailability of the whole system, as compared to a RC-EP system. The abstraction concept in the proposed system may also be applied to an EP node without changes in the API towards the application.

Data transfer using PIO and DMA may be chosen, e.g. as disclosed in the following:
It may be advantageous, if data transfer between the plurality of computing platforms is provided using Direct Memory Access mechanism and/or Programmed Input/Output mechanism.

The PCIe communication offers two types of transfer mechanisms.

One is the Direct Memory Access (or shortly DMA) based data transfer, where the DMA engine from the PCIe switch or the (high performance) computing platforms is used to transfer the data from the sender to the receiver and the CPU of the sender and receiver is only used for writing and reading data from its local memory.

The second one is the Programmable Input/Output (or shortly PIO) based data transfer, where the CPU of the (high performance) computing platforms are directly involved in the data transfer.

In the proposed system, both mechanisms may be used for the data transfer between the (high performance) computing platforms. The DMA can be used for the transfer of large bandwidth data, like raw sensor data, from the ADAS sensors or the generate providing of the data where interrupt and processing load is minimized.

The PIO may be used for use cases requiring low latency data transfer of smaller (but maybe important) data, like the synchronous exchange of the status information between two (high performance) computing platforms.

Additionally, it is also possible to trigger a doorbell event from one (high performance) computing platform.

Shared memory communication may be provided as described in the following:
The PCIe technology is intrinsically suited for shared memory communication.

The high-bandwidth interconnect may be provided by one or more microprocessors (uP) of each of the plurality of computing platforms being configured to allocate a memory space in a space, e. g. locally on microprocessors (uP) of the computing platforms and/or remotely on the microprocessors (uP) of the computing platforms as the communication counterparts, used for data transfer. Especially, the memory space may comprise one or more of memory windows. Preferably, each window may comprise one or more memory segments. Especially each memory segment may provide a memory of a defined size (of bytes), which may be used to send and/or receive data. Preferably, the memory segments may be mapped to an application space of the different functional applications so that the different functional applications can read and write into these memory segments.

Thus, a memory configuration may be provided. In the automotive context, to enable this shared memory communication, each microprocessor from a (high performance) computing platform may configure and allocate a memory space in the kernel space used for the data transfer. This memory space may be organized in a number of memory windows and each window may contain a number of memory segments. Each memory segment may represent a memory of a fixed size (of bytes). The segments in the memory spaces may then be used to send and receive data. These memory segments may be mapped to the process space of the application software so that the application software may read and write into these segments.

A Peripheral-Component-Interconnect-Express-switch may be configured to implement address translation between memory segments of different computing platforms comprising corresponding address domains. Especially, the Peripheral-Component-Interconnect-Express-switch may use a method for device memory regions (e. g. BAR) to implement address translation, to exchange configuration, data and/or notification.

Furthermore, the Peripheral-Component-Interconnect-Express-switch may be configured to enable each of the plurality of computing platforms to exchange configuration through status in-band with the Peripheral-Component-Interconnect-Express-switch.

Moreover, the Peripheral-Component-Interconnect-Express-switch may be configured to enable each of the plurality of computing platforms to exchange data and/or notification to other nodes through the Peripheral-Component-Interconnect-Express-switch.

Thus, PCIe switch capabilities may be described. The PCIe switch may implement the feature of address translation between the memory segments of different nodes (that is different (high performance) computing platforms), since they are of different address domain. In this case, the switch may use BARs exposed to the nodes to do the memory translation. The PCIe switch may also provide the feature to enable the nodes to exchange status in-band with the switch and other nodes.

As already mentioned above, the system may provide the high-bandwidth interconnect to different structures within the vehicle, being static or heterogeneous and/or being provided with variable computing platforms and/or different functional applications.

In the proposed system, the whole configuration of the system may use a static configuration. However, it is possible for the PCIe technology to support hot-plugging feature, which may identify and enumerable new nodes during runtime. This dynamic was usually discarded in the automotive context. This is because in the automotive domain, the communication relations as well as the participating nodes are rather static and will not change during the life time of a vehicle. For safety and security reasons, it may also be required that the nodes participating in the communication shall be configured statically before compile time.

APIs of shared memory communication may be configured as described in the following:
It may be provided that the shared memory interface (SHM-API) is configured to provide:
- Initialization and memory management,
especially to map/unmap corresponding memory segments into an application space of the different functional applications (APP), so that an application is allowed/denied access to required memory segments.

Thus, Initialization and memory management API may be provided:
o to map/unmap the corresponding memory segments into the process space of the applications so that the application is allowed/denied access of the memory segments

It may be provided that the shared memory interface is configured to provide:
- provide data transfer,
   especially using:
   Direct Memory Access protocol,
   preferably:
      - to read data from a local memory segment, especially on receiver side,
      - to write data into a local memory segment, especially on sender side, and/or

   - Programmed Input/Output protocol,
      preferably:
      - to read data directly from a remote memory segment,
      - to write data directly from a remote memory segment.

For example, when using Direct Memory Access protocol, the shared memory interface may be configured:
- to start a Direct Memory Access transfer,

Preferably, the shared memory interface may be configured to provide a doorbell and/or interrupt action, especially:
- to trigger a doorbell event, i.e., one sender triggers a doorbell event which is generates an interrupt on receiver side, and/or
- to register a callback function for a specific interrupt.

Further, the shared memory interface may be configured to provide different communication protocols, e.g. publish/subscribe protocol.

Advantages of the proposed concept compared to the current solutions may be the following:
The invention proposes a concept of using PCIe for automotive communication using shared memory, like APIs. The proposed solutions use the characteristics of the PCIe communication to address the disadvantages of Ethernet for certain use cases in the communication between (high performance) computing platforms:
It may provide much higher bandwidth compared to Ethernet. For example, a single PCIe lane according to Gen4 standard provides ca. 16 Gbit/s bandwidth. A PCIe link using 4 lanes would provide a 64 Gbit/s bandwidth. This fulfills the bandwidth requirements for automotive use cases where raw data of sensors like camera and LIDAR need to be transferred.

PCIe may provide the possibility of Direct Memory Access (DMA), which uses hardware to transfer data between the memory regions of different nodes. The PCIe switches as well as many microprocessors may easily provide DMA engines for this purpose. This may relieve the CPU from processing the actual transfer of the data and therefore reduce significantly the processing load on the computing units.

PCIe may provide an intrinsic shared memory like APIs, and application software which usually use shared memory paradigm to communicate to other software modules can directly use the shared memory also for in-vehicle communication, without converting them into services and using comparatively more heavy-weight implementation of ara::com or similar implementations.

Compared with existing applications of PCIe communication in other domains, the concept proposed have the following advantages addressing the automotive domain requirements:
The usage of PCIe switch and RC-RC setup makes the solution scalable and also fault tolerant.

Layered software architecture enables the deployment of the software stack and uniform API in a system of heterogeneous high computing platforms.

Offers uniform APIs towards the applications may be provided.

The usage of static configuration may address the automotive specific aspects like performance, safety, security and communication modelling and configuration.

According to the second aspect, it is provided:
A vehicle comprising a system, which may be configured as described above, for a high-bandwidth interconnect, especially a Peripheral-Component-Interconnect-Express-Communication, in an in-vehicle central computing platform as part of the vehicle, comprising a plurality of computing platforms for different functional applications using a shared memory interface.

Embodiments of the invention and its further developments as well as its advantages will be explained in more detail below using figures. The figures show schematically:
- Fig. 1: schematic representation of a modular software architecture, and
- Fig. 2: schematic representation of a system architecture.

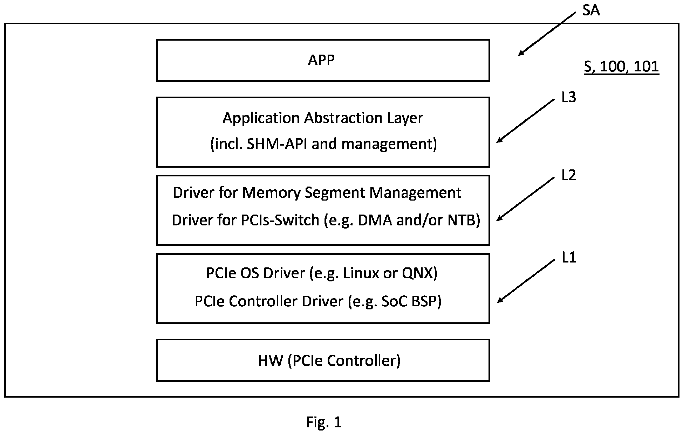

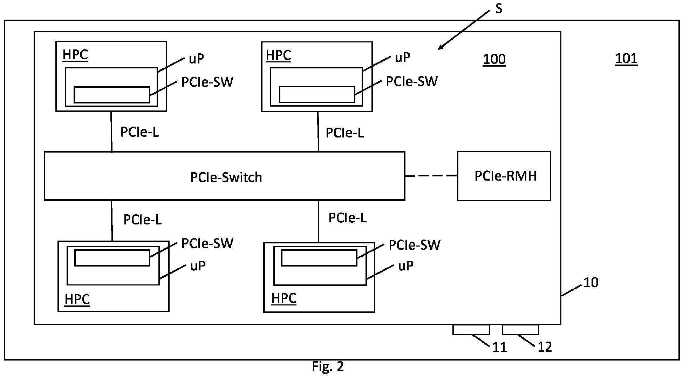

- Fig. 1 and 2: serve for explaining of an inventive idea.

A proposed system S is schematically shown in Fig. 2. The proposed system S is configured for a high-bandwidth interconnect PCIe, especially a Peripheral-Component-Interconnect-Express-Communication, in an in-vehicle central computing platform 100 as part of the vehicle 101.

As Fig. 2 illustrates, the vehicle 101 may contain an in-vehicle central computing platform 100, which may comprise a plurality of computing platforms HPC for different functional applications APP.

With the help of the proposed system S different functional applications APP may use a shared memory interface API, e. g. a shared memory application programming interface (which also may be shortly called as API).

As Fig.1 illustrates, the proposed system S comprise:
- a modular/layered software architecture SA with different abstraction layers L1, L2, L3, especially being applicable to heterogeneous vehicle equipment with variable computing platforms HPC and/or different functional applications APP.

The modular/layered software architecture SA (which also may be called a software stack) may be divided into the following layers:
The Fig. 1 shows a layered software architecture SA of the PCIe software stack on the computing platforms HPC.

The proposed system S comprise:
- a first abstraction layer L1 for the high-bandwidth interconnect PCIe for an operation system OS of microprocessors (uP) of the computing platforms (HPC).

OS / Base Layer (L1): The OS ("Operating System") and base layer may contain the PCIe controller drivers in the BSP provided by the SoC ("System On Chip") vendor and the PCIe OS drivers provided by the OS vendor. These drivers may provide the basic PCIe functionality according to the PCIe standards and the enumeration of the devices.

The proposed system S comprise:
- a second abstraction layer L2 for managing the high-bandwidth interconnect PCIe.

PCIe Stack Drivers (L2): These drivers may contain the drivers from the PCIe switch vendor for functionalities like DMA and NTB ("Non Transparent Bridge"). The PCIe switch drivers may provide the functionality of interfacing with the PCIe switch incl. e.g., the DMA engine control, the address mapping for the address translation and the status exchange between the node and switch and other nodes. These drivers also may contain the drivers to allocate and configure the physical memories used for communication.

The proposed system S comprise:
- a third abstraction layer L3 for the shared memory interface SHM-API for the different functional applications APP, especially to gain access to the shared memory, preferably provided by the plurality of computing platforms HPC.

Abstraction and APIs L3: This layer may contain runtime daemon for segment and resource management (applications APP may thus directly write into and read from physical segments and not through the runtime daemon). It may also contain necessary libraries and the APIs towards the applications.

The system S enables to apply PCIe communication as a high-bandwidth interconnect solution based on PCIe switches for data communication between (especially high performance) computing platforms HPC in the automotive domain (e. g. for in-vehicle communication). Proposed modular software architecture SA may be preferably applied to heterogeneous computing platforms using shared memory like API ("Application Programming Interface"), preferably including corresponding mechanisms, software architecture and the interfaces.

The proposed system S enables a generic automotive application to use PCIe communication using shared memory like communication paradigm by abstracting the PCIe specific details.

This may be achieved by using a software stack with modular/layered software architecture and providing a shared memory like API towards the applications.

The proposed system S is not focusing on a particular scenario or function within the vehicle and does not require PCIe specific implementation in the applications.

Advantageously, the proposed system S enables the technology to be rollout on a generic automotive application for different functional domains.

Preferably, the proposed system S abstracts the PCIe related details from the applications APP. Application developers do not need to concern with the PCIe details. The details are addressed by a configurable PCIe software stack (i.e. by the stack functionalities and its configurations).

Advantageously, the proposed system S provide shared memory based (and thus scalable) communication, e.g. using the DMA ("Direct Memory Access") and/or PIO ("Programmed Input/Output") mechanism.

Advantageously, the proposed system S may abstract the details of the HW/OS/SW framework of the SoCs and PCIe switches.

Utilizing the concept for abstraction, applications APP may be abstracted from the fact that memory is shared between applications APP either via local shared memory (i.e. RAM accessible by the CPU of one compute note) or remotely via PCIe Switch. The proposed system may automatically choose (either through static configuration or dynamic decision) according to an addressing scheme (specifying communication relationship and the deployment of the applications) one of the following transfer method:
o Local shared memory segment or equivalent mechanisms (including signaling of data availability for read or write via semaphore as doorbell replacement).
o Memory segment on source compute node mirrored to memory segment on target compute node(s) (including doorbell signaling) through DMA via either.
   □ PCIe switch direct DMA for RC-RC connections (incl. scatter/gather DMA when possible).
   □ PCIe switch multicast DMA.
   □ Compute node DMA for RC-EP connections (incl. scatter/gather DMA when possible).
∘ Memory segment read or written through PIO mechanism (including doorbell signaling).
∘ Transfer of data via alternative Ethernet connection, whereby the "shared memory" characteristics is emulated on top of the IP protocol stack, i.e. keeping the "shared memory" abstraction towards the application.

Dividing the software into different layers L1, L2, L3 enables the abstraction of the specifics of the HW, OS and PCIe switch, so that the stack can be used for a uniform solution for different HW, OS (e.g., Linux or QNX) as well as the PCIe switch. Towards the applications the same API is used. This enables efficient and compatible communication between the high-performance computing platforms such as computing platforms HPC customized to different automotive functional domains.

With the help of the proposed system S a plurality of advantages may be achieved.
(a) The proposed system S may use a PCIe switch for the PCIe communication, making the solution scalable to multiple (high performance) computing platforms HPC.
(b) The proposed system S provides a modular software architecture SA for the PCIe stack on the (high performance) computing platforms HPC which applies to heterogeneous (HW and OS) computing platforms.
(c) The proposed system S provides higher level protocols and APIs enabling automotive applications to use the remote shared memory communication.

PCIe communication and application in distributed automotive E/E systems may comprise:
A centralized (high performance) platform architecture, which may be implemented as described in the following:
As Fig. 2 shows, each of the plurality of computing platforms HPC may be integrated in an in-vehicle central computing platform 100 with corresponding casing 10, especially comprising a power supply 11 and a cooling system 12.

The Fig. 2 shows an example of a centralized system S architecture in the automotive domain, where (high performance) computing platforms HPC like single computing platforms HPC may be integrated in a physical casing 10 with power supply 11 and cooling system 12. Such an architecture enables the usages of PCIe as communication technology since the (high performance) computing platforms HPC may be connected with the PCIe switch, especially without a cable connection.

Each of the plurality of computing platforms HPC may comprise at least one or more microcontroller and/or microprocessor systems to host one or more functional applications APP, especially:
- advanced driver assistance systems ADAS,
- infotainment functions,
- driving and charging functions,
- connectivity functions, etc.

The whole system S comprise multiple (high performance) computing platforms HPC, each of which may comprise multiple microcontroller and microprocessor systems. Each of these (high performance) computing platforms HPC may be used to host software functions of specific domains, like ADAS ("Advanced Driver Assistance Systems"), Infotainment, driving and charging functions, connectivity, etc.

As Fig. 2 shows, one or more microprocessors of each of the plurality of computing platforms HPC may comprise a software stack/layer PCIe-SWforthe high-bandwidth interconnect PCIe. The PCIe communication may be primarily targeted at the communication between the computing platforms HPC. On each computing platform HPC using the PCIe communication, a PCIe software stack/layer PCIe-SW may be integrated.

As Fig. 2 shows, a Peripheral-Component-Interconnect-Express-switch PCIe-Switch may be provided for the high-bandwidth interconnect PCIe, especially comprising a firmware with a switch configuration.

As Fig. 2 shows, a remote management host PCIe-RMH, preferably in the form of a microcontroller, may be provided, especially comprising a software to run management tasks for a Peripheral-Component-Interconnect-Express-switch PCIe-Switch.

As Fig. 2 shows, each of the plurality of computing platforms HPC may be connected to a Peripheral-Component-Interconnect-Express-switch PCIe-Switch using a Peripheral-Component-Interconnect-Express-link PCIe-L, especially comprising one or more Peripheral-Component-Interconnect-Express-lanes, preferably 1, 2, 4 etc., which may be chosen depending on the bandwidth need.

Preferably, the high-bandwidth interconnect PCIe may be configured to be used parallel to an Ethernet based communication in the vehicle 100, especially to serve for such functional applications APP which require increased bandwidth, reduced latency and/or hardware-based data transfer with reduced interrupt and processing load. The PCIe communication does not need to replace the Ethernet-based backbone communication. It may be parallel to the Ethernet communication to serve for specific use cases requiring large bandwidth, low latency and/or hardware based data transfer with reduced interrupt and processing load.

Potential target use cases may be provided as described in the following:
Potential use cases for the PCIe communication may be divided into the following categories:
- Data transfer with increased/large bandwidth:
   Typical examples of this use case may be transfer of raw sensor data, e.g. camera images, from one (high performance) computing platform HPC to another, optionally also in a multicast fashion. The bandwidth requirement for each individual use case may easily go up to two-digit Gbit/s range and would be too much for Ethernet connection both from the communication bandwidth and processing load point of view. The DMA based transfer using PCIe may solve this problem both from the bandwidth due to much larger bandwidth and the processing load (due to HW based data transfer) point of view.
- Data transfer with reduced/low latency:
   PCIe based communication may also enable data transfer that requires low latencies. Due to a large bandwidth and a mature and efficient implementation of the PCIe technology in the lower layer (TLP), the data transfer with PCIe offers also very low latency.
- Data transfer with reduction of interrupt loads:
   PCIe may also provide data transfer with reduced interrupt loads. The DMA transfer using hardware can reduce the number of interrupts generated in the software for the processing of data packets to only those necessary. Therefore, it may also be suited for providing the general availability of data to high performance computing platforms e.g., signals from sensor/actuator layers.

PCIe communication and application in distributed automotive E/E systems may comprise:
A RC-to-RC communication architecture through a PCIe switch, which may be implemented as described in the following:
Preferably, the plurality of computing platforms HPC may be configured to build an RC-to-RC-Architecture for the high-bandwidth interconnect PCIe. Advantageously, each of the plurality of computing platforms HPC may have microprocessors uP configured as a root complex node RC within a RC-to-RC-Architecture of the high-bandwidth interconnect PCIe. Further, each of the plurality of computing platforms HPC may comprise a corresponding address domain within a RC-to-RC-Architecture of the high-bandwidth interconnect PCIe.

Generally, a PCIe node may be configured as a Root Complex RC node or an End Point EP node. In the proposed system, each of the (high performance) computing platform may be preferably configured as RC ("Root Complex") node, e. g. having its own memory address domain, which may be partitioned and isolated. The PCIe switch maps and translates between the different memory address domains thus enabling the communication between different root complexes. The RC-to-RC-Node-Architecture may be advantageously since in this case each (high performance) computing platform HPC may have its own memory address domain. Therefore, a system fault on one node might not lead to the unavailability of the whole system, as compared to a RC-EP system. The abstraction concept in the proposed system can also be applied to a EP node without changes in the API towards the application.

Data transfer using PIO and DMA may be chosen, e.g. as disclosed in the following:
The PCIe communication offers two types of transfer mechanisms.

One is the Direct Memory Access (or shortly DMA) based data transfer, where the DMA engine from the PCIe switch or the (high performance) computing platforms HPC is used to transfer the data from the sender to the receiver and the CPU of the sender and receiver is only used for writing and reading data from its local memory.

The second one is Programmable Input/Output (or shortly PIO) based data transfer, where the CPU of the (high performance) computing platforms HPC are directly involved in the data transfer.

In the proposed system S, both mechanisms may be used for the data transfer between the (high performance) computing platforms HPC. The DMA can be used for the transfer of large bandwidth data, like raw sensor data, from the ADAS sensors or the generate providing of the data where interrupt and processing load is minimized.

The PIO may be used for use cases requiring low latency data transfer of smaller (but maybe important) data, like the synchronous exchange of the status information between two (high performance) computing platforms HPC.

Additionally, it is also possible to trigger a doorbell event from one (high performance) computing platform HPC.

Shared memory communication may be provided as described in the following:
The PCIe technology is intrinsically suited for shared memory communication.

The high-bandwidth interconnect may be provided by one or more microprocessors (uP) of each of the plurality of computing platforms HPC being configured to allocate a memory space in a space, e. g. locally on microprocessors (uP) of the computing platforms HPC and/or remotely on the microprocessors (uP) of the computing platforms (HPC) as the communication counterparts, used for data transfer. This memory space may be organized in a number of memory windows. Each window may contain a number of memory segments. Each memory segment may represent a memory of a fixed size (of bytes). The segments in the memory spaces may then be used to send and receive data. These memory segments may be mapped to the application APP space so that the application APP software may read and write into these memory segments.

A Peripheral-Component-Interconnect-Express-switch PCIe-Switch may implement the feature of address translation between the memory segments of different nodes that is different high performance computing platforms HPC, since they are of different address domain. In this case, the switch may use BARs exposed to the nodes to do the memory translation. The PCIe switch may also provide the feature to enable the nodes to exchange status in-band with the switch and other nodes.

As already mentioned above, the whole configuration of the system may use a static configuration. However, it is possible for the PCIe technology to support hot-plugging features, which may identify and enumerable new nodes during runtime. These dynamics was usually discarded in the automotive context. This is because that in the automotive domain, the communication relations as well as the participating nodes are rather static and will not change during the life time of a vehicle. For safety and security reasons, it may also be required that the nodes participating in the communication shall be configured statically before compile time.

APIs of shared memory communication may be configured as described in the following:
In may be provided hat the shared memory interface API is configured to provide:
- Initialization and memory management,
especially to map/unmap corresponding memory segments into an application space of the different functional applications APP, so that an application is allowed/denied access to appropriate memory segments.

Thus, Initialization and memory management API may be provided:
o to map/unmap the corresponding memory segments into the process space of the applications so that the application is allowed/denied access of the memory segments

In may be provided hat the shared memory interface API is configured to provide:
- provide data transfer,
   especially using:
   Direct Memory Access DMA protocol,
   preferably:
      - to read data from a local memory segment, especially on receiver side,
      - to write data into a local memory segment, especially on sender side, and/or

   - Programmed Input/Output PIO protocol,
      preferably:
      - To read data directly from a remote memory segment,
      - To write data directly from a remote memory segment.

For example, when using Direct Memory Access DMA protocol, the shared memory interface API may be configured:
- to start a Direct Memory Access DMA transfer,

Preferably, the shared memory interface API may be configured to provide a doorbell and/or interrupt action, especially:
- to trigger a doorbell event, i.e., one sender triggers a doorbell event which is generates an interrupt on receiver side, and/or
- to register a callback function for a specific interrupt.

Further, the shared memory interface API may be configured to provide different communication protocols, e.g. publish/subscribe protocol.

Advantages of the proposed concept compared to the current solutions may be the following:
The invention proposes a concept of using PCIe for automotive communication using shared memory, like APIs. The proposed solutions use the characteristics of the PCIe communication to address the disadvantages of Ethernet for certain use cases in the communication between high performance computing platforms:
It may provide much higher bandwidth compared to Ethernet. For example, a single PCIe lane according to Gen4 standard provides ca. 16 Gbit/s bandwidth. A PCIe link using 4 lanes would provide a 64 Gbit/s bandwidth. This fulfills the bandwidth requirements for automotive use cases where raw data of sensors like camera and LIDAR need to be transferred.

PCIe may provide the possibility of Direct Memory Access DMA, which uses hardware to transfer data between the memory regions of different nodes. The PCIe switches as well as many microprocessors may easily provide DMA engines for this purpose. This may relieve the CPU from processing the actual transfer of the data and therefore reduce significantly the processing load on the computing units.

PCIe may provide an intrinsic shared memory, like APIs, and application software which usually use shared memory paradigm to communicate to other software modules can directly use the shared memory also for in-vehicle communication, without converting them into services and using comparatively more heavy-weight implementation of ara::com or similar implementations.

Compared with existing applications of PCIe communication in other domains, the concept and concept proposed have the following advantages addressing the automotive domain requirements:
The usage of PCIe switch and RC-RC setup makes the solution scalable and also fault tolerant.

Layered software architecture enables the deployment of the software stack and uniform API in a system of heterogeneous high computing platforms.

Offers uniform APIs towards the applications may be provided.

The usage of static configuration may address the automotive specific aspects like performance, safety, security and communication modelling and configuration.

A corresponding vehicle 100 comprising a respective system S builds another aspect of the present invention.

The above description of the figures describes the present invention only in the context of examples. Of course, individual features of the embodiments may be combined with each other, provided it is technically reasonable, without leaving the scope of the invention.

### Reference signs

- 100: in-vehicle central computing platform

- 101: vehicle

- APP: application

- SHM-API: shared memory interface
- uP: microprocessor

- SA: software architecture

- L1: layer
- L2: layer
- L3: layer

- S: system

- HPC: computing platform

- 10: casing
- 11: power supply
- 12: cooling system

- PCIe-SW: software stack

- PCIe: high-bandwidth interconnect

- PCIe-Switch: Peripheral-Component-Interconnect-Express-switch
- PCIe-RMH: remote management host
- PCIe-L: Peripheral-Component-Interconnect-Express-link

## Claims

1. A system (S) for a high-bandwidth interconnect (PCIe), especially a Peripheral-Component-Interconnect-Express-Communication, in an in-vehicle central computing platform (100) as part of a vehicle (101),
the in-vehicle central computing platform (100) comprising a plurality of computing platforms (HPC), optionally high performance computing platform and/or integration computing platform, for different functional applications (APP) using a shared memory interface (SHM-API), especially a shared memory application programming interface,
the system (S) comprising:
- a modular software architecture (SA) with different abstraction layers (L1, L2, L3), especially being applicable to heterogeneous vehicle equipment with variable computing platforms (HPC) and/or different functional applications (APP),
- a first abstraction layer (L1) for the high-bandwidth interconnect (PCIe) for an operation system (OS) of microprocessors (uP) of the computing platforms (HPC),
- a second abstraction layer (L2) for managing the high-bandwidth interconnect (PCIe),
- a third abstraction layer (L3) for the shared memory interface (SHM-API) for the different functional applications (APP), especially to gain access to the shared memory, preferably provided by the plurality of computing platforms (HPC).

2. The system (S) according to claim 1,
wherein each of the plurality of computing platforms (HPC) is integrated in an in-vehicle central computing platform (100) with a corresponding casing (10), especially comprising a power supply (11) and a cooling system (12).

3. The system (S) according to claim 1 or 2,
wherein each of the plurality of computing platforms (HPC) comprise at least one or more microcontroller and/or microprocessor systems to host one or more functional applications (APP), especially:
- advanced driver assistance systems (ADAS),
- infotainment functions,
- driving and charging functions,
- connectivity functions, etc.

4. The system (S) according to one of the preceding claims,
wherein each of the plurality of computing platforms (HPC) comprise a software stack (PCIe-SW) for the high-bandwidth interconnect (PCIe),
and/or wherein a Peripheral-Component-Interconnect-Express-switch (PCIe-Switch) is provided for the high-bandwidth interconnect (PCIe), especially comprising a firmware with a switch configuration,
and/or wherein a remote management host (PCIe-RMH), preferably in the form of a microcontroller, is provided, especially comprising a software to run management tasks for a Peripheral-Component-Interconnect-Express-switch (PCIe-Switch).

5. The system (S) according to one of the preceding claims,
wherein each of the plurality of computing platforms (HPC) is connected to a Peripheral-Component-Interconnect-Express-switch (PCIe-Switch) using a Peripheral-Component-Interconnect-Express-link (PCIe-L), especially comprising one or more Peripheral-Component-Interconnect-Express-lanes, preferably 1, 2, 4 etc.

6. The system (S) according to one of the preceding claims,
wherein the high-bandwidth interconnect (PCIe) is configured to be used parallel to a Ethernet based communication in the in-vehicle central computing platform (100) as part of a vehicle (101), especially to serve for such functional applications (APP) which require increased bandwidth, reduced latency and/or hardware based data transfer with reduced interrupt and processing load.

7. The system (S) according to one of the preceding claims,
wherein the high-bandwidth interconnect (PCIe) is configured to be used for data transfer with large bandwidth, e.g. one or more Gbit/s, over 10 Gbit/s, 50 Gbit/s, 60 Gbit/s, especially to transfer raw sensor data, e.g. camera images, from one computing platform (HPC) to another computing platform (HPC), optionally in a multicast manner,
and/or wherein the high-bandwidth interconnect (PCIe) is configured to be used for data transfer with reduced latency and/or with reduction of interrupt loads, such as control signals for different sensors, actors, devices and/or subsystems of the in-vehicle central computing platform (100).

8. The system (S) according to one of the preceding claims,
wherein the plurality of computing platforms (HPC) is configured to build an RC-to-RC - Architecture for the high-bandwidth interconnect (PCIe),
and/or wherein each of the plurality of computing platforms (HPC) has microprocessors (uP) configured as a root complex nodes (RC) within a RC-to-RC-Architecture of the high-bandwidth interconnect (PCIe),
and/or wherein each of the plurality of computing platforms (HPC) comprises a corresponding address domain within a RC-to-RC-Architecture of the high-bandwidth interconnect (PCIe).

9. The system (S) according to one of the preceding claims,
wherein data transfer between the plurality of computing platforms (HPC) is provided using Direct Memory Access (DMA) mechanism and/or Programmed Input/Output (PIO) mechanism.

10. The system (S) according to one of the preceding claims,
wherein the high-bandwidth interconnect is provided by one or more microprocessors (uP) of each of the plurality of computing platforms (HPC) being configured to allocate a memory space in a space, e. g. locally on microprocessors (uP) of the computing platforms (HPC) and/or remotely on the microprocessors (uP) of the computing platforms (HPC) as the communication counterparts, used for data transfer,
wherein especially the memory space comprises one or more of memory windows,
wherein preferably each window comprises one or more memory segments,
wherein especially each memory segment provides a memory of a defined size (of bytes), which may be used to send and/or receive data,
wherein preferably the memory segments are mapped to an application space of the different functional applications (APP) so that the different functional applications (APP) can read and write into these memory segments.

11. The system (S) according to one of the preceding claims,
wherein a Peripheral-Component-Interconnect-Express-switch (PCIe-Switch) is configured to implement address translation between memory segments of the microprocessors (uP) of different computing platforms (HPC) comprising corresponding address domains,
wherein especially the Peripheral-Component-Interconnect-Express-switch (PCIe-Switch) uses a method for device memory regions (BAR) to implement address translation, to exchange configuration, data and/or notification,
and/or wherein the Peripheral-Component-Interconnect-Express-switch (PCIe-Switch) is configured to enable each of the plurality of computing platforms (HPC) to exchange configuration through status in-band with the Peripheral-Component-Interconnect-Express-switch (PCIe-Switch),
and/or wherein the Peripheral-Component-Interconnect-Express-switch (PCIe-Switch) is configured to enable each of the plurality of computing platforms (HPC) to exchange data and/or notification to other nodes through the Peripheral-Component-Interconnect-Express-switch (PCIe-Switch).

12. The system (S) according to one of the preceding claims,
wherein the system provides the high-bandwidth interconnect (PCIe) to static or heterogeneous vehicle equipment with variable computing platforms (HPC) and/or different functional applications (APP).

13. The system (S) according to one of the preceding claims,
Wherein the shared memory interface (SHM-API) is configured to provide:
- Initialization and memory management,
especially to map/unmap corresponding memory segments into an application space of the different functional applications (APP), so that an application is allowed/denied access to memory segments,
- provide data transfer,
especially using:
Direct Memory Access (DMA) protocol,
preferably:
- to read data from a local memory segment, especially on receiver side,
- to write data into a local memory segment, especially on sender side, and/or
- Programmed Input/Output (PIO) protocol,
preferably:
- To read data directly from a remote memory segment,
- To write data directly from a remote memory segment.

14. The system (S) according to one of the preceding claims,
wherein especially, when using Direct Memory Access (DMA) protocol, the shared memory interface (SHM-API) is configured:
- to start a Direct Memory Access (DMA) transfer,
and/or wherein the shared memory interface (SHM-API) is configured to provide a doorbell and/or interrupt action, especially:
- to trigger a doorbell event, i.e., one sender triggers a doorbell event which is generates an interrupt on receiver side, and/or
- to register a callback function for a specific interrupt.
And/or wherein the shared memory interface (SHM-API) is configured to provide different communication protocols, e.g. publish/subscribe protocol.

15. An in-vehicle central computing platform (100) comprising a system (S) according to one of the preceding claims for a high-speed interconnect (PCIe), especially a Peripheral-Component-Interconnect-Express-Communication, in the in-vehicle central computing platform (100) as part of a vehicle (101), comprising a plurality of computing platforms (HPC) for different functional applications (APP) using a shared memory interface (SHM-API).
